# EUROPEAN PATENT SPECIFICATION

(11) **EP 2 133 765 B1**
(45) Date of publication and mention of the grant of the patent: **27.11.2019**
(21) Application number: 08104362.2
(22) Date of filing: 11.06.2008
(51) Int. Cl.: G05B 19/10

(54) **User interface and a method thereof**
Benutzerschnittstelle und Verfahren dafür
Interface utilisateur et son procédé

(43) Date of publication of application: 16.12.2009
(73) Proprietor: Siemens Aktiengesellschaft, 80333 München (DE)
(72) Inventor: Munoz Ibarra, Pablo, 91058, Erlangen (DE); Fister, Markus, 91054, Erlangen (DE); Prechtl, Christian, 46145, Oberhausen (DE)

(56) References cited:
- EP-A- 1 788 462
- WO-A-2006/024623
- US-A- 4 998 472
- US-A- 5 714 971
- US-A1- 2005 159 932
- US-A1- 2007 239 351

## Description

The invention relates to a user interface for use in an industrial automation system.

In industrial automation systems, the processing and management of engineering project data has got a vital importance. The most common engineering systems used for this are complicated and difficult to learn. The visual representation of the project data tends to be comprehensive and complex. In complex engineering projects, an abundance of functionality, objects and object types are presented to the user. The user is quickly overwhelmed by this large amount of information and action alternatives.

In most engineering systems, project data is presented in the form of trees that usually are structured by object types (i.e. function-blocks, programs, variables, hardware-modules, watch-tables, alarms etc.). The user can invoke functions via selecting an object and choosing an entry in the main menu or toolbar of the application. Therefore the user must have knowledge on the containing object model or overall functionality that is available in the engineering project. He must act in accordance with an object model that is not necessarily suited to his mental model of the engineering process.

The document WO 2006/024623 A describes a graphical user interface to represent relationships, for example in a technical system, a content management system or a research system.

The document US 2007/239351 A1 describes a system management human machine interface application for use in a process control system which enables users to view or monitor information regarding system status and performance and to initiate changes to the operation of system requirement, checkpoint control stations and execute diagnostics.

The object of the present invention is to provide a more intuitive user interface for use in an industrial automation system.

This object is achieved by a user interface according to claim 1 and a method according to claim 5.

The invention is based on the observation that in conventional engineering systems all functions are presented at the same time, for example in an application menu. Furthermore, this information is presented together with engineering data, for example in a project tree or even aggregated at the engineering objects as is the case with context menus. In the user interface presented herein, all the same information can be presented in a portal view, but in a hierarchical and progressively disclosing manner based on the main goals that need to be achieved in an engineering system. This supports a more intuitive user handling. Also the user is provided the facility to switch between the portal view and a full fledged project view which gives a conventional view on the project data. By selecting the third user selectable identifiers, the entire accessible project data is selectively accessible and can be displayed in the project view. This data is the filtered data based on the main function and the subordinate function. The invention gives a function based access to the engineering data, while retaining a data based access in a parallel conventional view.

In a preferred embodiment of the invention, the display of the at least one first user selectable identifier and the at least one second user selectable identifier is based on a user's expertise. This extends the interface to support certain user classes, for example beginner, expert, etc. This helps in presenting all necessary information in the engineering project while reducing it to the engineering content and functionality that is understandable to different category of users having different project experience levels.

In a further preferred embodiment of the invention, the display of the at least one first user selectable identifier and the at least one second user selectable identifier is based on a user's role. This extends the interface to support certain user roles, for example commissioner, administrator, programmer etc. This gives simplified access to complex project data and abundant engineering functionality based on what exactly a user having a specific role is supposed to deal with.

In another alternative embodiment the portal view further comprises an input selection area adapted for navigating to a location for performing a function instantly at any point in time. This enables the user to navigate to a required location for performing a function instantly at any point in time from the current portal view.

The present invention is further described hereinafter with reference to preferred embodiments shown in the accompanying drawings, in which:
FIG 1 is an exemplary illustration showing the user interface with portal view on engineering data,
FIG 2 is an exemplary illustration showing the user interface with portal view on engineering data along with the provision to select an additional context, and
FIG 3 is an exemplary illustration showing the user interface with project view on engineering data.

In accordance with psychological theories on action planning, actions are planned and executed with regard to certain goals. These goals can differ in dimension and time scale. Usually, actions are divided into operative sub-goals that have to be accomplished on the way to a larger final goal. Situations are apprehended and information is taken up with respect to the action-goal at hand. The proposed solution makes use of this knowledge on human behavior. The invention helps the user to accomplish his goals easily without the need to understand all possible action alternatives and project content. In engineering systems for industrial automation, these large scale goals are main functions to be accomplished, the sub-goals are subordinate functions that are used to accomplish the main function. The proposed user interface presents all necessary information in the engineering project while reducing it to the engineering content and functionality that is needed in a certain step.

In order to reduce complexity in the engineering process, commonly wizards are used to support a certain engineering step. However, these wizards oftentimes can only be executed once, do not serve the purpose to change data and constitute a modal dialog window where the user cannot interrupt his work until the wizard is finished. In comparison to a wizard, the invention provides an interruptible workflow and allows changing existing data.

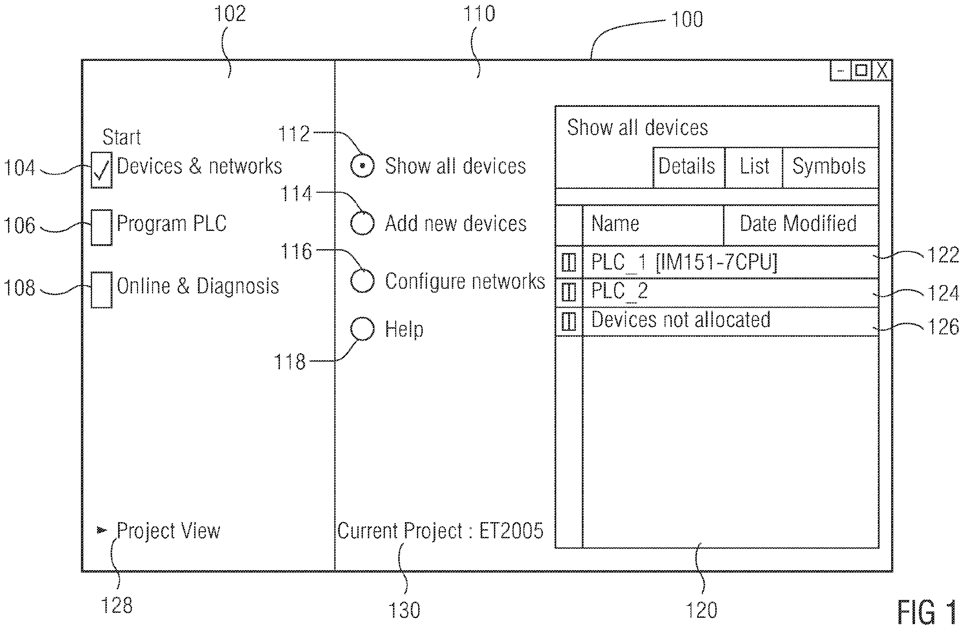

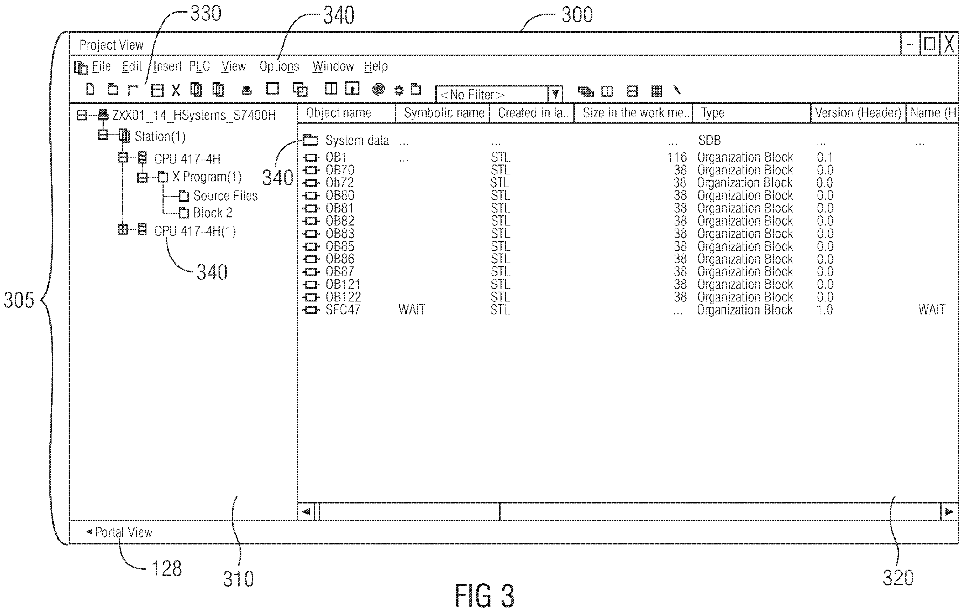

FIG 1 is an exemplary illustration showing the user interface with portal view 100 on engineering data. The portal view 100 comprises a first display region 102 displaying user selectable identifiers 104, 106, 108 representing main functions accomplishable within an engineering system. The main function might be for example, to handle devices and networks, program a logic controller or diagnose an automation system online. The portal view 100 also comprises a second display region 110 displaying user selectable identifiers 112, 114, 116, 118 representing subordinate functions that are usable to accomplish the main function 104 related to devices and networks which has been selected in this case. In case of handling devices and networks the subordinate functions might be to get an overview of existing devices, to add new devices, to configure the network and an associated help function. The display of the subordinate functions depends on the selection of the main function. The main function and subordinate functions are hierarchically linked. The portal view 100 comprises an optional third display region 120 adaptable to display context-specific selection of project data 122, 124, 126. The display of this context-specific project data 122, 124, 126 is based on the user selection of the subordinate function, in this case the subordinate function identifier 112, to show all devices. The context-specific project data 122, 124, 126 in this case might be a list of existing devices, networks or other data contained in the engineering project. Engineering data is only presented at this point and filtered according to user's selection of the main function and the subordinate function. If no engineering data is needed for a certain action, for example when the user wants to get help or to connect with a device, the displaying of the context-specific project data might be omitted and as a result the third display 120 is not required. At any point in time the portal view 100 can be switched to a full fledged conventional project view 300 (as shown in FIG 3) which can provide full functionality in parallel to the portal view 100. The portal view 100 and the project view 300 comprise a user selectable switching means 128 for switching between them. When complex information needs to be displayed for a certain engineering step, the view can be switched to a project view. The active current project is also displayed in the portal view using an identifier 130.

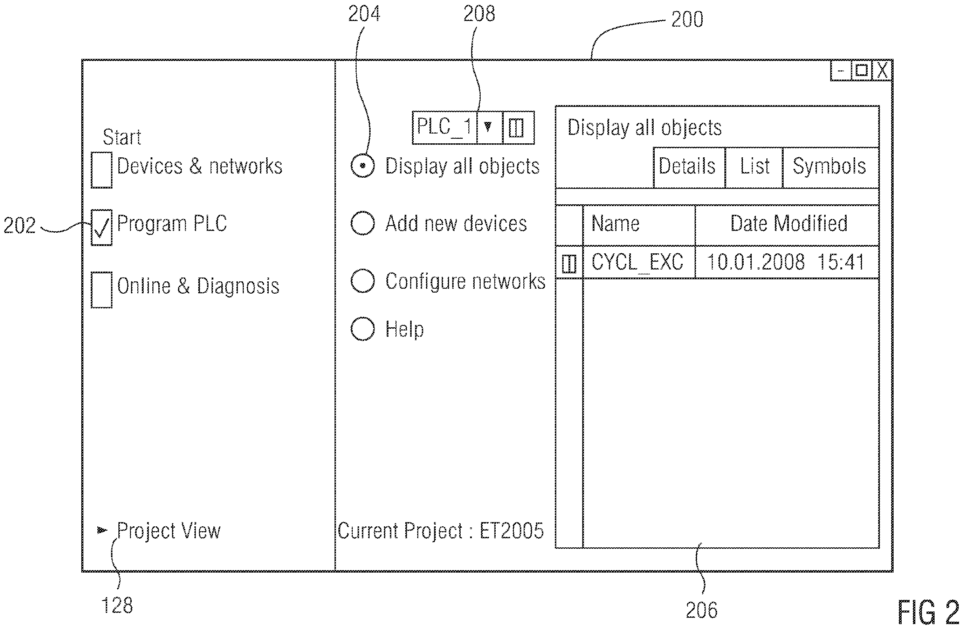

FIG 2 is an exemplary illustration showing the user interface with portal view on engineering data along with the provision to select an additional context. The portal view 200 also gives a possibility to select an additional context, for example an engineering controller to work on. For this the portal view 200 further comprises an input selection area 208 for entering and selecting an additional context. Here a main function identifier 202 indicating a program PLC and a subordinate function identifier 204 indicating to display all objects which is associated with the main function is selected by the user resulting in a context-specific selection 206 of project data. The additional context can be a device or another super-ordinate object. For example, if the user's main function is to create a program block, the system needs to know on which device to create this block. The additional context helps in finding the system relevant information that is not available implicitly.

FIG 3 is an exemplary illustration showing the user interface with a full fledged project view on engineering data. The project view 300 comprises a display region 305 having a plurality of control panes 310, 320, 330 comprising project information. The display region 305 displays plurality of user selectable identifiers 340, representing the entire accessible project data. By selecting the user selectable identifiers, the entire accessible project data is selectively accessible and can be displayed in the project view.

The user interface in the portal view substantially separates the presented project data from functionality, making the information less complex and understandable while still presenting all necessary information. The main function and the associated subordinate functions displayed in the portal view can be organized based on user's expertise. This extends the interface to support certain user classes, for example beginner, expert, etc. The same can be organized based on user roles. This extends the interface to support certain user roles, for example commissioner, administrator, programmer etc. This gives a simplified access to complex project data and abundant engineering functionality.

Summarizing, the invention relates to an improved user interface for use in an industrial automation system having a portal view 100, comprising a first display region 102 adapted to display at least one first user selectable identifier 104, 106, 108 representing at least one main function accomplishable within an engineering system. The portal view 100 comprises of a second display region 110 adapted to display at least one second user selectable identifier 112, 114, 116, 118 representing at least one subordinate function that is usable to accomplish the main function 104, the display of the second user selectable identifier being based on a first user selection of the first user selectable identifier. Further the portal view 100 comprises an optional third display region 120 adapted to display a context-specific selection of project data 122, 124, 126, the display of the context-specific selection of the project data 122, 124, 126 being based on a second user selection of the second user selectable identifier 112, 114, 116, 118. The user interface further has a project view 300 comprising a fourth display region 305 adapted to display third user selectable identifiers 340. The third user selectable identifiers 340 represents the entire accessible project data. Both the portal view 100, 200 and the project view 300 comprise a user selectable switching means for switching between the project view 300 and the portal view 100, 200.

## Claims

1. A user interface used in an industrial automation system, wherein the industrial automation system comprises an engineering system for processing and management of engineering project data of the industrial automation system,
wherein the user interface is prepared for the visual representation of project data of engineering projects of the engineering system and the entry of user actions,
the user interface having:
a portal view (100, 200), comprising:
a first display region (102) displaying at least one first user selectable identifier (104, 106, 108) representing at least one main function to be accomplished within the engineering system;
a second display region (110) displaying at least one second user selectable identifier (112, 114, 116, 118) representing at least one subordinate function linked to the main function, the display of the second user selectable identifier (112, 114, 116, 118) being based on a first user selection of the first user selectable identifier (104, 106, 108);
a third display region (120),
**characterized in that** the third display region (120) displays filtered project data (122, 124, 126) of an engineering project of the engineering system, the display of the filtered project data (122, 124, 126) being based on user selection of the main function and the subordinate function; and
a project view (300), comprising:
a fourth display region (305) displaying third user selectable identifiers (340), the third user selectable identifiers (340) representing the entire accessible project data of the engineering project of the engineering system, where the entire accessible project data is selectively accessible by selecting the third user selectable identifiers (340),
wherein the portal view (100, 200) and the project view (300) comprise a user selectable switching means (128) adapted for switching between the project view (300) and the portal view (100, 200).

2. The user interface according to claim 1, wherein the display of the at least one first user selectable identifier (104, 106, 108) and the at least one second user selectable identifier (112, 114, 116, 118) is based on a user's expertise.

3. The user interface according to claim 1, wherein the display of the at least one first user selectable identifier (104, 106, 108) and the at least one second user selectable identifier (112, 114, 116, 118) is based on a user's role.

4. The user interface according to any of the preceding claims wherein the portal view (100, 200) further comprises an input selection area (208) adapted for navigating to a location for performing a function instantly at any point in time.

5. A method for providing a user interface, said user interface used in an industrial automation system,
wherein the industrial automation system comprises an engineering system for processing and management of engineering project data of the industrial automation system,
the user interface being prepared for the visual representation of project data of engineering projects of the engineering system and the entry of user actions,
the method comprising the steps of:
in a portal view (100, 200) of said user interface:
displaying in a first display region (102) at least one first user selectable identifier (104, 106, 108) representing at least one main function to be accomplished within the engineering system;
displaying in a second display region (110) at least one second user selectable identifier (112, 114, 116, 118) representing at least one subordinate function, linked to the main function, the display of the second user selectable identifier (112, 114, 116, 118) being based on a first user selection of the first user selectable identifier (104, 106, 108);
displaying in a third display region (120) filtered project data (122, 124, 126) of an engineering project of the engineering system, the display of the filtered project data (122, 124, 126) being based on the main function and the subordinate function;
in a project view (300) of said user interface: in a fourth display region (305) displaying third user selectable identifiers (340), the third user selectable identifiers (340) representing the entire accessible project data of the engineering project of the engineering system, where the entire accessible project data is selectively accessible by selecting the third user selectable identifiers (340),
wherein the portal view (100, 200) and the project view (300) comprise a user selectable switching means (128) adapted for switching between the project view (300) and the portal view (100, 200).

6. The method according to claim 5, wherein the at least one first user selectable identifier (104, 106, 108) and the at least one second user selectable identifier (112, 114, 116, 118) are displayed based on a user's expertise.

7. The method according to claim 5, wherein the at least one first user selectable identifier (104, 106, 108) and the at least one second user selectable identifier (112, 114, 116, 118) are displayed based on a user's role.

8. The method according to any of the claims 5 to 7, wherein the portal view (100, 200) further comprises an input selection area (208) adapted for navigating to a location for performing a function instantly at any point in time.

## Patentansprüche

1. Benutzerschnittstelle, welche in einem industriellen Automatisierungssystem verwendet wird,
wobei das industrielle Automatisierungssystem ein Engineering-System zur Verarbeitung und Verwaltung von Engineering-Projektdaten des industriellen Automatisierungssystems umfasst,
wobei die Benutzerschnittstelle für die visuelle Darstellung von Projektdaten von Engineering-Projekten des Engineering-Systems und die Eingabe von Benutzeraktionen vorbereitet ist, wobei die Benutzerschnittstelle aufweist:
eine Portalansicht (100, 200), welche umfasst:
einen ersten Anzeigebereich (102), der wenigstens eine erste benutzerwählbare Kennung (104, 106, 108) anzeigt, die wenigstens eine Hauptfunktion darstellt, die innerhalb des Engineering-Systems auszuführen ist;
einen zweiten Anzeigebereich (110), der wenigstens eine zweite benutzerwählbare Kennung (112, 114, 116, 118) anzeigt, die wenigstens eine untergeordnete Funktion darstellt, die mit der Hauptfunktion verbunden ist, wobei die Anzeige der zweiten benutzerwählbaren Kennung (112, 114, 116, 118) auf einer ersten Benutzerauswahl der ersten benutzerwählbaren Kennung (104, 106, 108) basiert;
einen dritten Anzeigebereich (120),
**dadurch gekennzeichnet, dass** der dritte Anzeigebereich (120) gefilterte Projektdaten (122, 124, 126) eines Engineering-Projekts des Engineering-Systems anzeigt, wobei die Anzeige der gefilterten Projektdaten (122, 124, 126) auf einer Benutzerauswahl der Hauptfunktion und der untergeordneten Funktion basiert; und
eine Projektansicht (300), welche umfasst:
einen vierten Anzeigebereich (305), der dritte benutzerwählbare Kennungen (340) anzeigt, wobei die dritten benutzerwählbaren Kennungen (340) die gesamten zugänglichen Projektdaten des Engineering-Projekts des Engineering-Systems darstellen, wobei die gesamten zugänglichen Projektdaten durch Auswählen der dritten benutzerwählbaren Kennungen (340) selektiv zugänglich sind,
wobei die Portalansicht (100, 200) und die Projektansicht (300) ein benutzerwählbares Umschaltmittel (128) umfassen, das für ein Umschalten zwischen der Projektansicht (300) und der Portalansicht (100, 200) ausgelegt ist.

2. Benutzerschnittstelle nach Anspruch 1, wobei die Anzeige der wenigstens einen ersten benutzerwählbaren Kennung (104, 106, 108) und der wenigstens einen zweiten benutzerwählbaren Kennung (112, 114, 116, 118) auf den Kenntnissen eines Benutzers basiert.

3. Benutzerschnittstelle nach Anspruch 1, wobei die Anzeige der wenigstens einen ersten benutzerwählbaren Kennung (104, 106, 108) und der wenigstens einen zweiten benutzerwählbaren Kennung (112, 114, 116, 118) auf der Funktion eines Benutzers basiert.

4. Benutzerschnittstelle nach einem der vorhergehenden Ansprüche, wobei die Portalansicht (100, 200) ferner einen Eingabeauswahlbereich (208) umfasst, der für ein Navigieren zu einem Ort für die sofortige Ausführung einer Funktion zu einem beliebigen Zeitpunkt ausgelegt ist.

5. Verfahren zum Bereitstellen einer Benutzerschnittstelle, wobei diese Benutzerschnittstelle in einem industriellen Automatisierungssystem verwendet wird,
wobei das industrielle Automatisierungssystem ein Engineering-System zur Verarbeitung und Verwaltung von Engineering-Projektdaten des industriellen Automatisierungssystems umfasst,
wobei die Benutzerschnittstelle für die visuelle Darstellung von Projektdaten von Engineering-Projekten des Engineering-Systems und die Eingabe von Benutzeraktionen vorbereitet ist, wobei das Verfahren die Schritte umfasst:
in einer Portalansicht (100, 200) der Benutzerschnittstelle:
Anzeigen, in einem ersten Anzeigebereich (102), wenigstens einer ersten benutzerwählbaren Kennung (104, 106, 108),
die wenigstens eine Hauptfunktion darstellt, die innerhalb des Engineering-Systems auszuführen ist;
Anzeigen, in einem zweiten Anzeigebereich (110), wenigstens einer zweiten benutzerwählbaren Kennung (112, 114, 116, 118), die wenigstens eine untergeordnete Funktion darstellt, die mit der Hauptfunktion verbunden ist, wobei die Anzeige der zweiten benutzerwählbaren Kennung (112, 114, 116, 118) auf einer ersten Benutzerauswahl der ersten benutzerwählbaren Kennung (104, 106, 108) basiert;
Anzeigen, in einem dritten Anzeigebereich (120), von gefilterten Projektdaten (122, 124, 126) eines Engineering-Projekts des Engineering-Systems, wobei die Anzeige der gefilterten Projektdaten (122, 124, 126) auf der Hauptfunktion und der untergeordneten Funktion basiert;
in einer Projektansicht (300) der Benutzerschnittstelle:
in einem vierten Anzeigebereich (305), Anzeigen von dritten benutzerwählbaren Kennungen (340), wobei die dritten benutzerwählbaren Kennungen (340) die gesamten zugänglichen Projektdaten des Engineering-Projekts des Engineering-Systems darstellen, wobei die gesamten zugänglichen Projektdaten durch Auswählen der dritten benutzerwählbaren Kennungen (340) selektiv zugänglich sind,
wobei die Portalansicht (100, 200) und die Projektansicht (300) ein benutzerwählbares Umschaltmittel (128) umfassen, das für ein Umschalten zwischen der Projektansicht (300) und der Portalansicht (100, 200) ausgelegt ist.

6. Verfahren nach Anspruch 5, wobei die wenigstens eine erste benutzerwählbare Kennung (104, 106, 108) und die wenigstens eine zweite benutzerwählbare Kennung (112, 114, 116, 118) basierend auf den Kenntnissen eines Benutzers angezeigt werden.

7. Verfahren nach Anspruch 5, wobei die wenigstens eine erste benutzerwählbare Kennung (104, 106, 108) und die wenigstens eine zweite benutzerwählbare Kennung (112, 114, 116, 118) basierend auf der Funktion eines Benutzers angezeigt werden.

8. Verfahren nach einem der Ansprüche 5 bis 7, wobei die Portalansicht (100, 200) ferner einen Eingabeauswahlbereich (208) umfasst, der für ein Navigieren zu einem Ort für die sofortige Ausführung einer Funktion zu einem beliebigen Zeitpunkt ausgelegt ist.

## Revendications

1. Une interface utilisateur utilisée dans un système d'automatisation industriel, le système d'automatisation industriel comprenant un système d'ingénierie destiné au traitement et à la gestion de données de projet d'ingénierie du système d'automatisation industriel,
l'interface utilisateur étant préparée en vue de la représentation visuelle de données de projet de projets d'ingénierie du système d'ingénierie et de l'entrée d'actions d'utilisateur,
l'interface utilisateur possédant :
une vue de portail (100, 200), comprenant :
une première zone d'affichage (102) affichant au moins un premier identifiant sélectionnable par l'utilisateur (104, 106, 108) représentant au moins une fonction principale à accomplir à l'intérieur du système d'ingénierie,
une deuxième zone d'affichage (110) affichant au moins un deuxième identifiant sélectionnable par l'utilisateur (112, 114, 116, 118) représentant au moins une fonction subordonnée reliée à la fonction principale, l'affichage du deuxième identifiant sélectionnable par l'utilisateur (112, 114, 116, 118) étant basé sur une première sélection par l'utilisateur du premier identifiant sélectionnable par l'utilisateur (104, 106, 108),
une troisième zone d'affichage (120),
**caractérisée en ce que** la troisième zone d'affichage (120) affiche des données de projet filtrées (122, 124, 126) d'un projet d'ingénierie du système d'ingénierie, l'affichage des données de projet filtrées (122, 124, 126) étant basé sur une sélection par l'utilisateur de la fonction principale et de la fonction subordonnée, et
une vue de projet (300), comprenant :
une quatrième zone d'affichage (305) affichant des troisièmes identifiants sélectionnables par l'utilisateur (340), les troisièmes identifiants sélectionnables par l'utilisateur (340) représentant la totalité des données de projet accessibles du projet d'ingénierie du système d'ingénierie, la totalité des données de projet accessibles étant accessibles de manière sélective par la sélection des troisièmes identifiants sélectionnables par l'utilisateur (340),
dans laquelle la vue de portail (100, 200) et la vue de projet (300) comprennent un moyen de commutation sélectionnable par l'utilisateur (128) adapté à une commutation entre la vue de projet (300) et la vue de portail (100, 200).

2. L'interface utilisateur selon la revendication 1, dans laquelle l'affichage du au moins un premier identifiant sélectionnable par l'utilisateur (104, 106, 108) et du au moins un deuxième identifiant sélectionnable par l'utilisateur (112, 114, 116, 118) est basé sur une expertise d'utilisateur.

3. L'interface utilisateur selon la revendication 1, dans laquelle l'affichage du au moins un premier identifiant sélectionnable par l'utilisateur (104, 106, 108) et du au moins un deuxième identifiant sélectionnable par l'utilisateur (112, 114, 116, 118) est basé sur un rôle d'utilisateur.

4. L'interface utilisateur selon l'une quelconque des revendications précédentes dans laquelle la vue de portail (100, 200) comprend en outre une zone de sélection d'entrée (208) adaptée à une navigation vers un emplacement destiné à l'exécution d'une fonction instantanément à tout moment.

5. Un procédé de fourniture d'une interface utilisateur, ladite interface utilisateur étant utilisée dans un système d'automatisation industriel,
dans lequel le système d'automatisation industriel comprend un système d'ingénierie destiné au traitement et à la gestion de données de projet d'ingénierie du système d'automatisation industriel, l'interface utilisateur étant préparée en vue de la représentation visuelle de données de projet de projets d'ingénierie du système d'ingénierie et de l'entrée d'actions d'utilisateur,
le procédé comprenant les étapes suivantes :
dans une vue de portail (100, 200) de ladite interface utilisateur,
l'affichage dans une première zone d'affichage (102) d'au moins un premier identifiant sélectionnable par l'utilisateur (104, 106, 108) représentant au moins une fonction principale à accomplir à l'intérieur du système d'ingénierie,
l'affichage dans une deuxième zone d'affichage (110) d'au moins un deuxième identifiant sélectionnable par l'utilisateur (112, 114, 116, 118) représentant au moins une fonction subordonnée, reliée à la fonction principale, l'affichage du deuxième identifiant sélectionnable par l'utilisateur (112, 114, 116, 118) étant basé sur une première sélection par l'utilisateur du premier identifiant sélectionnable par l'utilisateur (104, 106, 108),
l'affichage dans une troisième zone d'affichage (120) de données de projet filtrées (122, 124, 126) d'un projet d'ingénierie du système d'ingénierie, l'affichage des données de projet filtrées (122, 124, 126) étant basé sur la fonction principale et la fonction subordonnée,
dans une vue de projet (300) de ladite interface utilisateur :
dans une quatrième zone d'affichage (305), l'affichage de troisièmes identifiants sélectionnables par l'utilisateur (340), les troisièmes identifiants sélectionnables par l'utilisateur (340) représentant la totalité des données de projet accessibles du projet d'ingénierie du système d'ingénierie, la totalité des données de projet accessibles étant accessibles de manière sélective par la sélection des troisièmes identifiants sélectionnables par l'utilisateur (340),
dans lequel la vue de portail (100, 200) et la vue de projet (300) comprennent un moyen de commutation sélectionnable par l'utilisateur (128) adapté à une commutation entre la vue de projet (300) et la vue de portail (100, 200).

6. Le procédé selon la revendication 5, dans lequel le au moins un premier identifiant sélectionnable par l'utilisateur (104, 106, 108) et le au moins un deuxième identifiant sélectionnable par l'utilisateur (112, 114, 116, 118) sont affichés en fonction d'une expertise d'utilisateur.

7. Le procédé selon la revendication 5, dans lequel le au moins un premier identifiant sélectionnable par l'utilisateur (104, 106, 108) et le au moins un deuxième identifiant sélectionnable par l'utilisateur (112, 114, 116, 118) sont affichés en fonction d'un rôle d'utilisateur.

8. Le procédé selon l'une quelconque des revendications 5 à 7, dans lequel la vue de portail (100, 200) comprend en outre une zone de sélection d'entrée (208) adaptée à une navigation vers un emplacement destiné à l'exécution d'une fonction instantanément à tout moment.
